# EUROPÄISCHE PATENTSCHRIFT

(11) **EP 2 961 694 B1**
(45) Veröffentlichungstag und Bekanntmachung des Hinweises auf die Patenterteilung: **04.12.2019**
(21) Anmeldenummer: 14716223.4
(22) Anmeldetag: 06.02.2014
(51) Int. Cl.: C02F 1/08, C02F 5/02

(54) **VERFAHREN ZUR BEHANDLUNG VON HÄRTEBILDNER ENTHALTENDEM WASCHWASSER**
METHOD FOR TREATING HARDNESS CONTAINING WASHING WATER
PROCÉDÉ DE TRAITEMENT D'UN EAU DE LAVAGE À DURETÉ ÉLEVÉE

(30) Priorität: 28.02.2013 DE 102013003321
(43) Veröffentlichungstag der Anmeldung: 06.01.2016
(73) Patentinhaber: Terrawater GmbH, 24148 Kiel (DE)
(72) Erfinder: SCHLICKUM, Till, 24107 Kiel (DE); ALTEGOER, Dietmar, 58452 Witten (DE)
(74) Vertreter: Lobemeier, Martin Landolf
(86) Internationale Anmeldenummer: PCT/DE2014/100040
(87) Internationale Veröffentlichungsnummer: WO 2014/131396

(56) Entgegenhaltungen:
- EP-A1- 0 568 159
- DE-A1- 10 154 471
- US-A- 4 931 187
- US-A1- 2004 238 452
- US-A1- 2005 247 638
- US-A1- 2008 237 138
- US-B1- 6 495 049

## Beschreibung

Die Erfindung betrifft ein Verfahren zur Behandlung von Härtebildner enthaltendem Waschwasser von bei der Zementherstellung, der Müllverbrennung oder der Verbrennung von Ersatzbrennstoffen anfallenden Stäuben.

Ein Verfahren zur Behandlung von Härtebildner enthaltendem Wasser ist beispielsweise aus der EP 0 568 159 A1 bekannt. Ein Verfahren von bei der Zementverarbeitung anfallendem Waschwasser ist aus der US 5 885 478 A bekannt.

Allgemein besteht bei der Behandlung von Rohwasser im Rahmen einer Reinigung zur Wiederverwendung bzw. Nutzbarmachung als Trink- oder Prozesswasser oder zur Verringerung von Abwassermengen oder zur Extraktion von im Rohwasser gelöster wiederverwertbarer Bestandteile zunächst das Problem, dass ein großer Anteil der im Rohwasser gelösten Bestandteile aus Härtebildnern besteht.

Als Härtebildner werden die im Wasser gelösten Mineralsalze bezeichnet, die als Carbonate, z.B. CaC03, und als Nicht-Carbonate, z.B. CaSO₄, zur Gesamthärte des Wassers beitragen. Carbonate und Nicht-Carbonate (auch als Carbonathärte und permanente Härte bezeichnet) stellen für Wasseraufbereitungsanlagen insofern ein Problem dar, dass diese in großen Mengen anfallen, die Anlagen durch Verschmutzung blockieren und auch die in geringeren Mengen anfallenden wertvollen Salze verschmutzen bzw. deren Extraktion erschweren können.

Aufgabe der Erfindung ist es daher, ein Verfahren bereitzustellen, das den Einfluss von Härtebildnern auf Behandlungsverfahren von Waschwasser von bei der Zementherstellung, der Müllverbrennung oder der Verbrennung von Ersatzbrennstoffen anfallenden Stäuben reduziert.

Diese Aufgabe wird durch das Verfahren mit den in Anspruch 1 genannten Schritten gelöst. Die Unteransprüche geben vorteilhafte Ausgestaltungen der Erfindung wieder.

Der Grundgedanke der Erfindung liegt darin, die Härtebildner aus dem Waschwasser von bei der Zementherstellung, der Müllverbrennung oder der Verbrennung von Ersatzbrennstoffen anfallenden Stäuben durch thermische Entkalkung zu entfernen, wobei gleichzeitig eine Aufkonzentrierung des behandelten Waschwassers durch Verdunstung erfolgt. Insbesondere werden all diejenigen Härtebildner aus dem Waschwasser durch Ausfällen entfernt, deren Löslichkeit bei entsprechender Temperierung des Waschwassers bis zu einer Temperatur unterhalb des Siedepunkts herabgesetzt wird. Durch eine Reduzierung des Wasseranteils im Waschwasser steigt die Konzentration der darin gelösten Stoffe, z.B. Salze, die durch bevorzugtes wiederholtes Durchlaufen des erfindungsgemäßen Verfahrens im Waschwasser stark aufkonzentriert werden und durch eine sich an das erfindungsgemäße Verfahren anschließende entsprechende Temperaturbehandlung aus dem behandelten Waschwasser ebenfalls durch Ausfällen extrahiert werden können.

Zum einen können unter bevorzugter Gewinnung von durch Verdunstung und anschließender Kondensation gewonnenem reinem Wasser damit Waschwässer stark eingeengt werden. Zum anderen können den Waschwässern auf einfachem Weg gezielt Salze, z.B. NaCl, KCl etc., entnommen werden, die vielfältigen Verwertungsmöglichkeiten zugeführt werden können.

Erfindungsgemäß wird Waschwasser von bei der Zementherstellung, der Müllverbrennung oder der Verbrennung von Ersatzbrennstoffen anfallenden Stäuben behandelt, das in seinem Volumen eingeengt nach Durchlaufen des erfindungsgemäßen Verfahrens weiter in seine wiederverwertbaren Bestandteile fraktioniert werden kann.

Zunächst wird das Waschwasser auf eine Temperatur oberhalb der Löslichkeitsgrenze der Härtebildner, bevorzugt 90 °C, erwärmt. Dieses erwärmte Waschwasser, in dem bereits während der Erwärmung Härtebildner ausfallen, wird der Oberfläche eines Befeuchtungsmaterials (in Bezug auf die darauf folgende Verdunstung) im Überschuss zugeführt. Das Befeuchtungsmaterial weist bevorzugt eine große Oberfläche auf, von der eine Teilmenge des Waschwassers von der Oberfläche des Befeuchtungsmaterials unter durch Verdunstung bedingtem gleichzeitigem Abkühlen des dem Befeuchtungsmaterials zugeführten Waschwassers verdunstet wird, wobei dem Befeuchtungsmaterial bevorzugt ständig neues Waschwasser zugeführt wird. Geeignetes Befeuchtungsmaterial ist aus der DE 10 2008 031 586 B3 und der DE 10 2013 003 320 B3 bekannt.

Das nicht verdunstete, an der Oberfläche des Befeuchtungsmaterials abgekühlte Waschwasser wird, bevorzugt schwerkraftgetrieben, durch Abtropfen aufgefangen. Das derart behandelte Waschwasser ist um die (am Befeuchtungsmaterial) ausgefallenen Härtebildner, vorrangig Carbonate und/oder Sulfate, depletiert und um die Teilmenge des verdunsteten Waschwassers verringert - bei dem behandelten Waschwasser handelt es sich also in Bezug auf die verbliebenen weiteren Bestandteile um aufkonzentriertes Waschwasser. Bevorzugt werden die Schritte a bis d wiederholt, wobei das behandelte Waschwasser als Waschwasser behandelt wird. Derart kann die Menge an Härtebildnern weiter reduziert und können die wertvollen, zur Wiederverwertung geeigneten Salze weiter aufkonzentriert werden.

Für einen kontinuierlichen Betrieb ist vorgesehen, dass Waschwasser kontinuierlich bereitgestellt wird, wobei das behandelte Waschwasser mit dem Waschwasser vermengt wird. Insbesondere entspricht die Menge von dem Verfahren kontinuierlich zugeführtem unbehandeltem Waschwasser der kontinuierlich verdunsteten Menge Waschwasser, sodass das sich im Umlauf befindliche Waschwasservolumen identisch ist.

Bevorzugt wird das verdunstete Waschwasser kondensiert und das Kondensat aufgefangen. Es kann für verschiedene Zwecke, z.B. nach Aufsalzung auch als Trinkwasser verwendet werden.

## Patentansprüche

1. Verfahren zur Behandlung von Härtebildner enthaltendem Waschwasser von bei der Zementherstellung, der Müllverbrennung oder der Verbrennung von Ersatzbrennstoffen anfallenden Stäuben,
mit den Schritten:
a. Erwärmen des Waschwassers auf eine Temperatur oberhalb der Löslichkeitsgrenze der Härtebildner,
b. Befeuchten der Oberfläche eines Befeuchtungsmaterials mit dem erwärmten Waschwasser im Überschuss,
c. Verdunsten lassen einer Teilmenge des Waschwassers von der Oberfläche des Befeuchtungsmaterials unter gleichzeitigem Abkühlen des dem Befeuchtungsmaterials zugeführten Waschwassers und Ausfällen der Härtebildner am Befeuchtungsmaterial,
d. Auffangen des überschüssigen um die ausgefallenen Härtebildner depletierten und um die Teilmenge des verdunsteten Waschwassers verringerten, aufkonzentrierten Waschwassers als behandeltes Waschwasser.

2. Verfahren nach Anspruch 1, **gekennzeichnet durch** Wiederholen der Schritte a bis d, wobei das behandelte Waschwasser als Waschwasser behandelt wird.

3. Verfahren nach Anspruch 2, **dadurch gekennzeichnet, dass** dem behandelten Waschwasser vor Schritt a eine Menge unbehandeltes Waschwasser zugeführt wird, die maximal der zuvor in Schritt c verdunsteten Menge Waschwasser entspricht.

4. Verfahren nach einem der vorhergehenden Ansprüche, **dadurch gekennzeichnet, dass** das verdunstete Waschwasser kondensiert und das Kondensat aufgefangen wird.

## Claims

1. Method for treating hardener-containing wash water for dust formed during cement production, waste incineration or combustion of substitute fuels,
comprising the steps of:
a. heating the wash water to a temperature above the solubility limit of the hardeners,
b. wetting the surface of a humidifying material with an excess of the heated wash water,
c. allowing a portion of the wash water to evaporate from the surface of the humidifying material while simultaneously cooling the wash water supplied to the humidifying material and precipitating the hardeners on the humidifying material,
d. collecting the concentrated excess wash water that is depleted of the precipitated hardeners and reduced by the portion of the evaporated wash water as treated wash water.

2. Method according to claim 1, **characterized by** repeating steps a to d, the treated wash water being treated as wash water.

3. Method according to claim 2, **characterized in that** an amount of untreated wash water is supplied to the treated wash water before step a, which amount corresponds at most to the amount of wash water previously evaporated in step c.

4. Method according to any of the preceding claims, **characterized in that** the evaporated wash water is condensed and the condensate is collected.

## Revendications

1. Procédé de traitement des eaux de lavage contenant des agents de dureté des poussières résultant de la production de ciment, de l'incinération des déchets ou de la combustion de combustibles de substitution,
comportant les étapes consistant à :
a. Chauffer l'eau de lavage à une température supérieure à la limite de solubilité des agents de dureté,
b. Humidifier la surface d'un matériau humidifiant avec l'eau de lavage chauffée avec excès,
c. Laisser une partie de l'eau de lavage s'évaporer de la surface du matériau humidifiant tout en refroidissant simultanément l'eau de lavage fournie au matériau humidifiant et en précipitant les agents de dureté sur le matériau humidifiant,
d. Recueillir, comme eau de lavage traitée, l'excédent d'eau de lavage concentrée dépourvue des agents de dureté précipités et réduite de la partie de l'eau de lavage évaporée.

2. Procédé selon la revendication 1, **caractérisé par** la répétition des étapes a à d, dans lequel l'eau de lavage traitée est traitée comme eau de lavage.

3. Procédé selon la revendication 2, **caractérisé en ce que**, avant l'étape a, une quantité d'eau de lavage non traitée est ajoutée à l'eau de lavage traitée, laquelle quantité correspond au plus à la quantité d'eau de lavage préalablement évaporée à l'étape c.

4. Procédé selon l'une des revendications précédentes, **caractérisé en ce que** l'eau de lavage évaporée se condense et le condensat est recueilli.
